# EUROPEAN PATENT APPLICATION

(11) **EP 4 651 293 A1**
(43) Date of publication of application: **19.11.2025**
(21) Application number: 24880238.1
(22) Date of filing: 14.10.2024
(51) Int. Cl.: H01M 50/46, H01M 50/446, H01M 50/451, H01M 50/42, H01M 50/426, H01M 50/431, H01M 50/466, H01M 10/04

(54) **ELECTRODE ASSEMBLY AND SECONDARY BATTERY INCLUDING SAME**

(30) Priority: 20.10.2023 KR 20230140906
(71) Applicant: LG Energy Solution, Ltd., Seoul 07335 (KR)
(72) Inventor: LEE, Sangkyun, Daejeon 34122 (KR); KWON, Sungwoo, Daejeon 34122 (KR); KIM, Ki Tae, Daejeon 34122 (KR); PARK, Minchan, Daejeon 34122 (KR); LEE, Younghwan, Daejeon 34122 (KR)
(74) Representative: Hoffmann Eitle
(86) International application number: PCT/KR2024/096354
(87) International publication number: WO 2025/084902

(57) **Abstract**

Disclosed is an electrode assembly including a positive electrode, a negative electrode, and a separator provided between the positive electrode and the negative electrode, in which a dry adhesive force of the separator to the negative electrode is greater than a dry adhesive force of the separator to the positive electrode.

## Description

### [Technical Field]

This application claims priority to and the benefit of Korean Patent Application No. 10-2023-0140906 filed in the Korean Intellectual Property Office on OCTOBER 20, 2023, the entire contents of which are incorporated herein by reference.

The present invention relates to an electrode assembly and a secondary battery including the same.

### [BACKGROUND ART]

Secondary batteries, which are classified into coin type batteries, cylindrical type batteries, prismatic type batteries, and pouch type batteries depending on a shape of a battery case, can be recharged, unlike primary batteries, and may be formed to have a small size and a large capacity. Accordingly, a lot of research and development on the secondary batteries are currently in progress.

Recently, with the increasing spread of electric vehicles (EVs), technological development and demand for large-capacity secondary batteries used in the electric vehicles are increasing. In order to manufacture large-capacity secondary batteries, a size of an electrode assembly mounted inside a battery case is also increasing.

The electrode assembly is a chargeable/dischargeable power generating device having a stack structure of electrodes and a separator. The separator includes an organic/inorganic composite porous coating layer to provide adhesive force between the electrode and the separator.

The electrode assembly is manufactured into a secondary battery through a packaging process and/or an activation process after being mounted inside the battery case. However, after the activation process, a bending phenomenon occurs where the electrode assembly is bent or warped due to uneven adhesive force between the separator and the electrode, because an expansion rate of the negative electrode is greater than that of the positive electrode before and after the activation process, leading to deformation of the shape of the secondary battery itself including the electrode assembly.

Therefore, there is a need to develop a technique to prevent the bending phenomenon of the electrode assembly or the secondary battery including the same.

### [Detailed Description of the Invention]

### [Technical Problem]

The present invention has been made in an effort to provide an electrode assembly and a secondary battery capable of preventing a bending phenomenon of the electrode assembly or the secondary battery including the same. Technical Solution

### [Technical Solution]

An exemplary embodiment of the present invention provides an electrode assembly including: a positive electrode, a negative electrode, and a separator provided between the positive electrode and the negative electrode, wherein a dry adhesive force of the separator to the negative electrode is greater than a dry adhesive force of the separator to the positive electrode.

Another exemplary embodiment of the present invention provides a secondary battery including a sealed battery case, and the electrode assembly according to an exemplary embodiment of the present invention inside the battery case.

### [Advantageous Effects]

The electrode assembly according to an exemplary embodiment of the present invention has an effect of preventing a bending phenomenon that may occur after activation of a secondary battery including the electrode assembly.

The electrode assembly according to an exemplary embodiment of the present invention can prevent the bending phenomenon, thereby aligning and fixing the electrodes so that the electrodes are not misaligned, resulting in an improvement in energy density.

### [Brief Description of Drawings]

FIG. 1 is a graph showing measurement results of a dry adhesive force of a separator to a positive electrode, a dry adhesive force of the separator to a negative electrode, a wet adhesive force of the separator to the positive electrode, and a wet adhesive force of the separator to the negative electrode according to Example 1 and Comparative Example 1.
FIG. 2 is a photograph showing interfaces of the negative electrode, the positive electrode, and the separator after activation of a secondary battery of each of Example 1 and Comparative Example 1.

### [DETAILED DESCRIPTION]

Hereinafter, exemplary embodiments of the present invention will be described in detail such that one skilled in the art to which the present invention belongs can readily implement the same. However, the present invention may be embodied in various different forms and is not limited to the configurations described herein.

When one part "includes", "comprises" or "has" one constituent element in the present specification, unless otherwise specifically described, this does not mean that another constitutional element is excluded but means that another constitutional element may be further included.

In the present specification, "dry adhesive force" refers to an adhesive force of a separator measured in a state in which an electrode assembly including the separator is not immersed in an electrolyte solution. That is, the dry adhesive force refers to an adhesive force of the separator measured before activation of the electrode assembly. In the present specification, the dry adhesive force is also referred to as an adhesive force of the separator in a dry state.

In the present specification, "wet adhesive force" refers to an adhesive force of a separator measured in a state in which an electrode assembly including the separator is immersed in an electrolyte solution. That is, the wet adhesive force refers to an adhesive force of the separator measured after activation of the electrode assembly. In the present specification, the wet adhesive force is also referred to as an adhesive force of the separator in a state of being immersed in an electrolyte solution.

In the present specification, the dry adhesive force and the wet adhesive force can be measured by cutting the electrode assembly into a size of 55 mm in width and 20 mm in length to prepare a specimen in which a positive electrode, a separator, and a negative electrode are stacked, and then peeling the separator of the specimen from one side of the separator at a speed of 100 mm/min in a 90° peeling mode using a tensile tester (UTM equipment). That is, the methods for measuring the dry adhesive force and the wet adhesive force are the same, except for whether the electrode assembly is immersed in an electrolyte solution. Additionally, an absolute value of a difference in measured adhesive force can be defined as a deviation of the adhesive force.

In the present specification, "activation" or "activation process" of a secondary battery refers to a process (or step) of activating the secondary battery and removing gas after a charging process of the secondary battery.

### <Electrode Assembly>

After the activation process, the negative electrode and the positive electrode each expand. In this case, the expansion rates of the negative electrode and the positive electrode after the activation process are different. This difference in expansion rate between the negative electrode and the positive electrode causes uneven adhesive force between the separator and the electrodes, resulting in a bending phenomenon in which the electrode assembly is bent or warped.

Accordingly, an exemplary embodiment of the present invention provides an electrode assembly in which a dry adhesive force of the separator to the negative electrode is greater than a dry adhesive force of the separator to the positive electrode. This can prevent the bending phenomenon from occurring after the activation process of a secondary battery including the electrode assembly. In addition, it is also possible to prevent a dog bone shape from appearing at an interface between the separator and the electrode after the activation process of the secondary battery.

With this, it is possible to provide a secondary battery including an electrode assembly with excellent performance.

In an exemplary embodiment of the present invention, the dry adhesive force of the separator to the negative electrode may be 0.5 gf/20 mm to 30 gf/20 mm, preferably 3 gf/20 mm or greater and 25 gf/20 mm or less, and more preferably 5 gf/20 mm or greater and 15 gf/20 mm or less.

In an exemplary embodiment of the present invention, the dry adhesive force of the separator to the positive electrode may be 0.2 gf/20 mm to 20 gf/20 mm, preferably 1 gf/20 mm or greater and 15 gf/20 mm or less, and more preferably 1.5 gf/20 mm or greater and 10 gf/20 mm or less.

In an exemplary embodiment of the present invention, the dry adhesive force of the separator to the negative electrode may be 1.5 to 5 times, preferably 1.5 to 2 times or 2.5 to 5 times, the dry adhesive force of the separator to the positive electrode.

In an exemplary embodiment of the present invention, a deviation in magnitude between the dry adhesive force of the separator to the negative electrode and the dry adhesive force of the separator to the positive electrode may be 10 gf/20 mm or less, preferably 8 gf/20 mm or less, and more preferably 5 gf/20 mm or less. The deviation refers to the absolute value of the difference in adhesive force magnitude.

When the dry adhesive forces of the separator to the positive electrode and negative electrode satisfy the above ranges, it is possible not only to prevent the bending phenomenon after the activation process but also to more easily convey the electrode assembly while maintaining a stack structure of the electrode assembly manufactured in a stacking process. That is, since it is possible to prevent deterioration in performance of the electrode assembly due to misalignment of the electrode positions during the conveying process, the resulting manufactured electrode assembly exhibits superior performance.

In an exemplary embodiment of the present invention, a wet adhesive force of the separator to the positive electrode may be greater than a wet adhesive force of the separator to the negative electrode. That is, the adhesive force of the separator to the electrode in a state of being immersed in an electrolyte solution may be greater for the positive electrode than for the negative electrode.

In an exemplary embodiment of the present invention, the wet adhesive force of the separator to the positive electrode may be 10 gf/20 mm or greater and 30 gf/20 mm or less, preferably 10 gf/20 mm or greater and 20 gf/20 mm or less.

In an exemplary embodiment of the present invention, the wet adhesive force of the separator to the negative electrode may be 3 gf/20 mm or greater and 15 gf/20 mm or less, preferably 5 gf/20 mm or greater and 10 gf/20 mm or less.

In an exemplary embodiment of the present invention, the wet adhesive force of the separator to the negative electrode may be 2 gf/20 mm or greater and 15 gf/20 mm or less, more preferably 2.5 gf/20 mm or greater and 8 gf/20 mm or less.

In an exemplary embodiment of the present invention, the wet adhesive force of the separator to the positive electrode may be 1.5 to 3 times, preferably 1.5 to 2.5 times, the wet adhesive force of the separator to the negative electrode.

In an exemplary embodiment of the present invention, the deviation in magnitude between the wet adhesive force of the separator to the positive electrode and the wet adhesive force of the separator to the negative electrode may be 8 gf/20 mm or less, preferably 5 gf/20 mm or less. The deviation refers to the absolute value of the difference in adhesive force magnitude.

When the wet adhesive force satisfies the above range, it is easy to prevent the bending phenomenon of the secondary battery during the activation process of the secondary battery including the electrode assembly. That is, the performance of the secondary battery can be improved.

That is, the electrode assembly according to an exemplary embodiment of the present invention has a feature that the separator has certain magnitudes of the adhesive force to the negative electrode before and after being immersed in an electrolyte solution, and the relative magnitudes of the adhesive forces of the separator to the positive electrode and the negative electrode are different before and after being immersed in the electrolyte solution. This can prevent the bending phenomenon of the secondary battery after the activation process.

In an exemplary embodiment of the present invention, the separator may include a porous polymer substrate, a first organic/inorganic composite porous coating layer formed on one surface of the polymer substrate, and a second organic/inorganic composite porous coating layer formed on the other surface of the polymer substrate. That is, the separator may include different organic/inorganic composite porous coating layers on both surfaces.

In an exemplary embodiment of the present invention, the first organic/inorganic composite porous coating layer and the second organic/inorganic composite porous coating layer may each include one or more types of particulate binder resins and one or more types of inorganic particles.

In an exemplary embodiment of the present invention, the first organic/inorganic composite porous coating layer refers to a layer in contact with the negative electrode, and the second organic/inorganic composite porous coating layer refers to a layer in contact with the positive electrode.

In an exemplary embodiment of the present invention, the first organic/inorganic composite porous coating layer may be a cured product of a first composition including a particulate binder resin and an inorganic particle, and may include 50 parts by weight to 80 parts by weight, preferably 60 parts by weight to 70 parts by weight, of the particulate binder resin based on 100 parts by weight of the first composition.

In an exemplary embodiment of the present invention, the second organic/inorganic composite porous coating layer may be a cured product of a second composition including a particulate binder resin and an inorganic particle, and may include 10 parts by weight to 40 parts by weight, preferably 15 parts by weight to 35 parts by weight, of the particulate binder resin based on 100 parts by weight of the second composition.

In an exemplary embodiment of the present invention, the particulate binder resin may include one or more selected from the group consisting of an acrylic-based polymer particle, a fluorine-based polymer, and a hybrid polymer particle of a fluorine-based polymer and an acrylic-based polymer. Specifically, the hybrid polymer particle of the fluorine-based polymer and the acrylic-based polymer may contain the fluorine-based polymer and the acrylic-based polymer in a weight ratio of 50:50 to 80:20.

The binder resin includes the hybrid polymer particle of the fluorine-based polymer and the acrylic-based polymer, making it possible to maintain the adhesive force of the separator at a certain level or higher before and after immersion in the electrolyte solution. This means that the shape stability of the electrode assembly can be improved, which makes it easier to provide an electrode assembly with uniform performance.

In an exemplary embodiment of the present invention, the fluorine-based polymer may be a homopolymer of vinylidene fluoride (PVDF), a copolymer of vinylidene fluoride and another polymerizable monomer, or a mixture of two or more thereof.

More specifically, another polymerizable monomer that can polymerize with vinylidene fluoride may include, but is not limited to, one or more selected from the group consisting of tetrafluoroethylene, hexafluoropropylene, trifluoroethylene, chlorofluoroethylene, 1,2-difluoroethylene, perfluoro(methylvinyl)ether, perfluoro(ethylvinyl)ether, perfluoro(propylvinyl)ether, perfluoro(1,3-dioxole), perfluoro(2,2-dimethyl-1,3-dioxole), trichloroethylene, and vinyl fluoride. In particular, the fluorine-based polymer may be a copolymer of vinylidene fluoride and hexafluoropropylene (HFP). The content of vinylidene fluoride and another polymerizable monomer may be, but is not limited to, 1 wt% to 20 wt%, preferably 1 wt% to 5 wt%, of the copolymer. The above-described another polymerizable monomer is intended to increase the wet adhesive force. If the content thereof is less than 1 wt%, it may be difficult to achieve the wet adhesive force, and if the content exceeds the above range, the resistance of the separator may become too high, which may deteriorate the performance of the electrode assembly.

In the present invention, the content of comonomer in the PVDF-based polymer can be measured by the 1H-NMR method using Varian 500 MHz. For detailed measurement methods, see Journal of Materials Chemistry, 2012, 22, 341 or AMT-3412-0k. For confirmation of the NMR spectrum, appropriate equipment, such as, for example, Bruker Avance III HD 700 MHz NMR or Varian 500 MHz NMR may be used.

In the present invention, the acrylic-based polymer may preferably be a (meth)acrylic acid ester or an acrylic-styrene copolymer. Specific examples of such (meth)acrylic acid ester include, for example, (meth)acrylic acid methyl, (meth)acrylic acid ethyl, (meth)acrylic acid n-propyl, (meth)acrylic acid i-propyl, (meth)acrylic acid n-butyl, (meth)acrylic acid i-butyl, (meth)acrylic acid n-amyl, (meth)acrylic acid i-amyl, (meth)acrylic acid hexyl, (meth)acrylic acid cyclohexyl, (meth)acrylic acid 2-ethylhexyl, (meth)acrylic acid n-octyl, (meth)acrylic acid nonyl, (meth)acrylic acid decyl, (meth)acrylic acid hydroxymethyl, (meth)acrylic acid hydroxyethyl, (meth)acrylic acid ethylene glycol, di(meth)acrylic acid ethylene glycol, di(meth)acrylic acid propylene glycol, tri(meth)acrylic acid trimethylolpropane, tetra(meth)acrylic acid pentaerythritol, hexa(meth)acrylic acid dipentaerythritol, (meth)acrylic acid allyl, and di(meth)acrylic acid ethylene, and may be one or more selected from these. Among these, one or more selected from (meth)acrylic acid methyl, (meth)acrylic acid ethyl, and (meth)acrylic acid 2-ethylhexyl are preferable, and (meth)acrylic acid methyl is particularly preferable.

More specifically, the acrylic-styrene copolymer may include an acrylic-based binder, and the acrylic-based binder may be a polyacrylate-based binder. For example, the binder may be one or more selected from the group consisting of styrene-butadiene rubber, nitrile-butadiene rubber, acrylonitrile-butadiene rubber, acrylonitrile-butadiene-styrene rubber, and an acrylate-based polymer, and specifically, may be a copolymer including acrylate.

In an exemplary embodiment of the present invention, the first organic/inorganic composite porous coating layer and the second organic/inorganic composite porous coating layer may each include a first binder resin including the acrylic-based polymer particle and a second binder resin including a hybrid polymer particle of a fluorine-based polymer and an acrylic-based polymer.

In an exemplary embodiment of the present invention, a glass transition temperature (Tg) of the acrylic-based polymer particle may be 40°C to 90°C, preferably 40°C to 60°C.

In an exemplary embodiment of the present invention, the inorganic particle may have a non-rectangular structure. When an inorganic particle satisfying the above structure is used, the separator has appropriate air permeability without interfering with formation of adhesive force of the separator.

Specifically, in an exemplary embodiment of the present invention, the inorganic particle may be Al₂O₃.

In an exemplary embodiment of the present invention, the separator may be folded and stacked in a zigzag form. That is, the electrode assembly according to an exemplary embodiment of the present invention may be stacked in a zigzag form.

In the present specification, the stacking form that the first electrode and the second electrode are alternately arranged between folds of the folded separator is referred to as zigzag stacking.

In this case, more specifically describing the form in which the first electrode and the second electrode are alternately arranged between folds of the folded separator, the folded separator may refer to a separator that is stacked while overlapping in a zigzag form. More specifically, the separator is stacked in a zigzag form while being folded in a form of alternately reciprocating between the left side of a stacking axis and the right side of the stacking axis based on the stacking axis. Further, the stacking is performed such that the first electrode and the second electrode are alternately arranged between folds of the stacked separator. Here, the stacking axis refers to a virtual axis parallel to a direction in which the first electrode, the separator, and the second electrode are stacked, and passing through a center of a stack in which the electrodes and the separator are stacked.

That is, the configuration that the first electrode and the second electrode are alternately arranged between folds of the separator means that the separator is stacked in a direction of the stacking axis while overlapping in a zigzag form, and the first electrode and the second electrode are each alternately inserted one by one in spaces (between the separator and the separator, i.e., between the folds of the separator) generated as the separator overlaps.

A technique or device that is commonly used in the art can be used to perform the zigzag stacking.

In an exemplary embodiment of the present invention, the negative electrode may include one or more of graphite and a silicon-based compound. The silicon-based compound may be called a silicon-based active material. The silicon-based compound may include, but is not limited to, SiO₂, and a silicon-based compound that is commonly used in the art can be used.

More specifically, in an exemplary embodiment of the present invention, the negative electrode may include a negative electrode current collector, and a negative electrode active material layer located on at least one surface of the negative electrode current collector and including a negative electrode active material, a binder polymer, and a conductive material, in which the negative electrode active material layer may include a lower layer region in surface-contact with the negative electrode current collector and an upper layer region in surface-contact with the lower layer region and extending to a surface of the negative electrode active material layer, and the lower layer region and the upper layer region may each independently include one or more of graphite and a silicon-based compound as the negative electrode active material.

In an exemplary embodiment of the present invention, the silicon-based compound may have a form in which a content thereof increases as the negative electrode active material layer becomes more distant from a surface of the negative electrode current collector.

### <Secondary Battery>

An exemplary embodiment of the present invention provides a secondary battery including a sealed battery case, and the electrode assembly according to an exemplary embodiment of the present invention inside the battery case. The secondary battery according to an exemplary embodiment of the present invention has a feature that no bending phenomenon occurs after the activation process.

Specifically, a flat ruler (hereinafter, referred to as ruler "a") is placed at one end of the secondary battery, and a separate flat ruler (hereinafter, referred to as ruler "b") is used to measure a maximum distance to a surface of the secondary battery facing a flat surface on which the secondary battery is placed. In this case, when a distance between a concave portion of the secondary battery and one surface of the ruler "a" measured using the ruler "b" is less than 3 mm, it is defined as having no bending.

The secondary battery according to an exemplary embodiment of the present invention may include the battery case in which an electrolyte solution is injected.

The secondary battery according to an exemplary embodiment of the present invention may be subjected to an activation process. The secondary battery according to an exemplary embodiment of the present invention may have no bending after the activation process. In this case, after the activation process, the electrode assembly taken out by opening the battery case may also have no bending.

In an exemplary embodiment of the present invention, the activation process for the secondary battery may be such that the secondary battery is charged one or more times at 0.3C to 0.8C under a temperature condition of 45°C to 55°C and a pressure condition of 0.5 kgf/cm² to 1.5 kgf/cm².

Although the exemplary embodiments of the present invention have been described in detail, it will be obvious to one skilled in the art that the scope of the present invention is not limited thereto and various modifications and variations can be made without departing from the technical spirit of the present invention defined in the claims.

### 1) Example 1

### <Manufacture of Electrode Assembly>

To prepare a negative electrode, a mixture of artificial graphite as a carbon-based active material, a binder polymer (SBR (styrene-butadiene rubber) and CMC (carboxymethyl cellulose)), and carbon black as a conductive material in a weight ratio of 95.5:3:1.5 was mixed with water as a dispersion medium in a weight ratio of 1:2 to prepare a slurry for a first active material layer. A slurry for a second active material layer was prepared, which was the same as the first active material layer, except that SiO₂ (silicon oxide) with a Coulombic efficiency of 80% or greater when charged and discharged at 0.1C was prepared as a silicon-based active material and the carbon-based active material and the silicon-based active material were mixed in a weight ratio of 9:1. That is, the weight ratio of an active material, a binder polymer, carbon black, and carbon nanotubes (CNTs) was 95.5:3:1.0:0.5, and the weight ratio of the carbon-based active material and the silicon-based active material in the active material was 9:1.

The specific surface area of the carbon nanotubes (CNTs) was 550 m²/g. The carbon nanotubes (CNTs) were multi-walled carbon nanotubes.

A first active material layer and a second active material layer were formed by coating the slurry for the first active material layer on one surface of a copper (Cu) thin film, which was a negative electrode current collector with a thickness of 10 µm, using a double slot die, then coating the slurry for the second active material layer on the slurry for the first active material layer, and then drying the coated slurries at 130°C for 1 hour under vacuum.

The first active material layer and the second active material layer formed in this manner were simultaneously rolled using a roll pressing method to prepare a negative electrode including an active material layer with a double-layer structure having a thickness of 80 µm. In this case, the thickness ratio of the first active material layer and the second active material layer was 1:1. The loading amount based on the dry weight of the negative electrode active material layer was 512 mg/25 cm² (drying criterion: 292 µm).

Next, to prepare the positive electrode, Li(Ni_{0.3}Mn_{0.5}Co_{0.2})O₂(NCM-352) as a positive electrode active material, carbon black as a conductive material, and polyvinylidene fluoride (PVdF) as a binder were added to N-methylpyrrolidone (NMP) as a solvent in a weight ratio of 96:2:2 to prepare a slurry for a positive electrode active material. The slurry was coated on one surface of an aluminum current collector with a thickness of 15 µm, and then dried and rolled under the same conditions as those of the negative electrode layer electrode, whereby a positive electrode was prepared. In this case, the loading amount based on the dry weight of the positive electrode active material layer was 988 mg/cm² (drying criterion: 242 µm).

Lastly, to prepare a separator, a polyethylene film (PE, thickness 9 µm), which is a porous polymer substrate, was prepared.

Then, a first composition obtained by adding a first binder, inorganic particles, and a dispersant to distilled water at room temperature and a second composition obtained by adding a second binder, inorganic particles, and a dispersant were prepared, respectively.

In this case, as the first binder, a copolymer of styrene and butylacrylate was used, with the weight ratio of the two monomers (styrene and butylacrylate) adjusted to 80:20 and a glass transition temperature (Tg) of 45°C.

As the second binder, a PVDF-HFP binder having a content of 5 wt% of HFP-derived repeating units was used.

In addition, Al₂O₃ was used as the inorganic particles.

Thereafter, 0.7 µm zirconia beads in the same amount as the inorganic particles were added to the distilled water, and then the mixture was bead-milled for 2 hours using a paint shaker to prepare an inorganic dispersion.

Then, a surfactant was additionally added to the inorganic dispersion, and the inorganic dispersion was stirred at 10 rpm for 10 minutes to prepare a first slurry and a second slurry in which the first binder and second binder particles and the inorganic particles were dispersed, respectively.

In this case, the first binder was included in an amount of 60 parts by weight based on 100 parts by weight of the first slurry, and the second binder was included in an amount of 20 parts by weight based on 100 parts by weight of the second slurry.

Thereafter, the first slurry and the second slurry were each coated on both surfaces of the polyethylene film (PE, thickness 9 µm) using a doctor blade, and dried using a hot air blower to form porous coating layers, each having a thickness of 2.5 µm, resulting in a separator of Example 1 with a total thickness of 14 µm.

While supplying the prepared positive electrode, negative electrode, and separator to a stack table, the separator was folded, and the positive electrode, the negative electrode, and the separator were stacked. Specifically, a stack using the 39 electrode sheets was prepared by stacking the positive electrodes, the negative electrodes, and the separator on the stack table in the form of the positive electrode and the negative electrode being alternately arranged between the respective folds of the separator. Then, an electrode assembly of Example 1 was prepared by heating and pressing the stack for 15 seconds (time condition) under a temperature condition of 60°C and a pressure condition of 2 MPa.

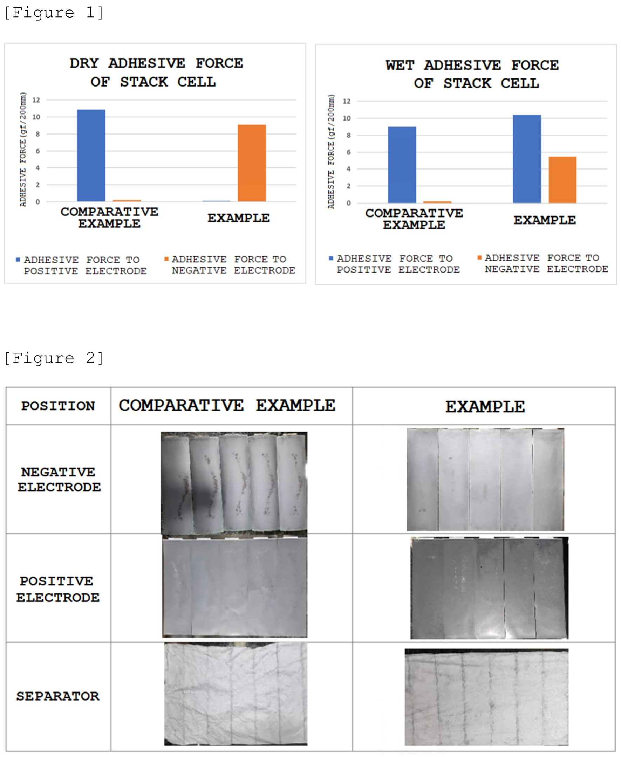

The dry adhesive force to the negative electrode and the dry adhesive force to the positive electrode of the electrode assembly of Example 1 were measured. The results are shown in Fig. 1.

Specifically, the dry adhesive force to the negative electrode and the dry adhesive force to the positive electrode of the electrode assembly of Example 1 were measured by cutting a portion of the electrode assembly into a size of 20 mm X 70 mm before immersing the electrode assembly in an electrolyte solution to produce a specimen in which the positive electrode, the separator, and the negative electrode were stacked, and then peeling the separator of the specimen from one side of the separator at a speed of 100 mm/min in a 90° peeling mode using a tensile tester (UTM equipment).

### <Preparation of Secondary Battery>

The electrode assembly of Example 1 was placed inside a pouch exterior material (battery case) of a laminate sheet of CPP/aluminum/nylon, an ethyl methyl carbonate electrolyte solution containing LiPF₆ was injected, and the pouch exterior material was heat-sealed to complete the assembly of the secondary battery.

Thereafter, the secondary battery was subjected to the activation process of the secondary battery in which the secondary battery was charged at 0.5C under a temperature condition of 50°C and a pressure condition of 1.0 kgf/cm².

### Comparative Example 1

An electrode assembly and a secondary battery were prepared in the same manner as in Example 1, except that the binder included in the slurry coated on both surfaces of a polyethylene film (PE, thickness 9 µm) was a PVdF-based binder and the content of the PVdF-based binder was 50 parts by weight based on 100 parts by weight of the slurry.

### Experimental Example 1 - Dry Adhesive Force Evaluation

Each of the electrode assemblies of Example 1 and Comparative Example 1 was cut to a size of 55 mm in width and 20 mm in length to produce a specimen in which the positive electrode, the separator, and the negative electrode were stacked. After attaching a double-sided tape on a slide glass, the positive electrode or negative electrode of the specimen was attached to the double-sided tape, and the specimen was pressed with a constant pressure to adhere the specimen to the double-sided tape. Then, the dry adhesive force of the separator to the positive electrode and the dry adhesive force of the separator to the negative electrode were measured using a 90° peel test method.

Specifically, the dry adhesive force of the separator to the positive electrode and the dry adhesive force of the separator to the negative electrode were measured by pulling the separator at a speed of 100 mm/min using a tensile tester (UTM equipment) to measure the force at which the separator was peeled off from each of the positive electrode and the negative electrode.

### Experimental Example 2 - Wet Adhesive Force Evaluation

After activation of each of the electrode assemblies of Example 1 and Comparative Example 1, the electrode assembly was cut to a size of 55 mm in width and 20 mm in length to produce a specimen in which the positive electrode, the separator, and the negative electrode were stacked. After attaching a double-sided tape on a slide glass, the positive electrode or negative electrode of the specimen was attached to the double-sided tape, and the specimen was pressed with a constant pressure to adhere the specimen to the double-sided tape. Then, the wet adhesive force of the separator to the positive electrode and the wet adhesive force of the separator to the negative electrode were measured using the 90° peel test method.

Specifically, the wet adhesive force of the separator to the positive electrode and the wet adhesive force of the separator to the negative electrode were measured by pulling the separator at a speed of 100 mm/min using a tensile tester (UTM equipment) to measure the force at which the separator was peeled off from each of the positive electrode and negative electrode.

Referring to FIG. 1, Example 1 showed that the dry adhesive force of the separator to the positive electrode before activation was 0.5 gf/20 mm, and the dry adhesive force of the separator to the negative electrode was 9.3 gf/20 mm. That is, it can be seen that the dry adhesive force of the separator to the negative electrode was greater than the dry adhesive force of the separator to the positive electrode. After activating the secondary battery in a high-temperature and high-pressure environment, in Example 1, the wet adhesive force of the separator to the positive electrode increased to 10.1 gf/20mm, and the wet adhesive force of the separator to the negative electrode decreased to 5.8 gf/20mm. That is, it can be seen that the wet adhesive force of the separator to the positive electrode and the wet adhesive force of the separator to the negative electrode were balanced.

In contrast, Comparative Example 1 showed that the dry adhesive force of the separator to the positive electrode before activation was 11.3 gf/20 mm, and the dry adhesive force of the separator to the negative electrode was 0.5 gf/20 mm. That is, it can be seen that the dry adhesive force of the separator to the positive electrode was greater. After activating the secondary battery in a high-temperature and high-pressure environment, in Comparative Example 1, the wet adhesive force of the separator to the positive electrode decreased to 9.1 gf/20 mm, and the wet adhesive force of the separator to the negative electrode increased to 0.9 gf/20 mm. However, it can be seen that the wet adhesive force of the separator to the positive electrode and the wet adhesive force of the separator to the negative electrode had a large deviation and were not balanced.

Referring to FIG. 2, it can be seen that in Example 1 where the wet adhesive force was even, the dog bone phenomenon and the bending phenomenon were not observed, whereas in the electrode assembly of Comparative Example 1 where the wet adhesive force was uneven, the dog bone phenomenon and the bending phenomenon occurred.

This shows that when the dry adhesive force of the separator to the negative electrode is greater than the dry adhesive force of the separator to the positive electrode, the wetting of the electrolyte solution is superior.

Although the present invention has been described with reference to preferred exemplary embodiments, it will be understood by one skilled in the art that various modifications and variations can be made to the present invention without departing from the technical spirit and scope of the present invention.

## Claims

1. An electrode assembly comprising:
a positive electrode;
a negative electrode; and
a separator provided between the positive electrode and the negative electrode,
wherein a dry adhesive force of the separator to the negative electrode is greater than a dry adhesive force of the separator to the positive electrode.

2. The electrode assembly of claim 1, wherein the dry adhesive force of the separator to the negative electrode is 0.5 gf/20 mm to 30 gf/20 mm.

3. The electrode assembly of claim 1, wherein the dry adhesive force of the separator to the positive electrode is 0.2 gf/20 mm to 20 gf/20 mm.

4. The electrode assembly of claim 1, wherein the dry adhesive force of the separator to the negative electrode is 1.5 to 5 times the dry adhesive force of the separator to the positive electrode.

5. The electrode assembly of claim 1, wherein the separator comprises:
a porous polymer substrate;
a first organic/inorganic composite porous coating layer formed on one surface of the polymer substrate; and
a second organic/inorganic composite porous coating layer formed on the other surface of the polymer substrate.

6. The electrode assembly of claim 5, wherein the first organic/inorganic composite porous coating layer and the second organic/inorganic composite porous coating layer each comprise a particulate binder resin and an inorganic particle, and
wherein the particulate binder resin comprises one or more selected from the group consisting of an acrylic-based polymer particle; a fluorine-based polymer; and a hybrid polymer particle of a fluorine-based polymer and an acrylic-based polymer.

7. The electrode assembly of claim 5, wherein the first organic/inorganic composite porous coating layer is a cured product of a first composition comprising a particulate binder resin and an inorganic particle and comprises 50 parts by weight to 80 parts by weight of the particulate binder resin based on 100 parts by weight of the first composition.

8. The electrode assembly of claim 5, wherein the second organic/inorganic composite porous coating layer is a cured product of a second composition comprising a particulate binder resin and an inorganic particle and comprises 10 parts by weight to 40 parts by weight of the particulate binder resin based on 100 parts by weight of the second composition.

9. The electrode assembly of claim 1, wherein the separator is folded and stacked in a zigzag shape.

10. A secondary battery comprising:
a sealed battery case; and
the electrode assembly of any one of claims 1 to 9 inside the battery case.
